# EUROPÄISCHE PATENTANMELDUNG

(11) **EP 3 831 581 A1**
(43) Veröffentlichungstag der Anmeldung: **09.06.2021**
(21) Anmeldenummer: 20210096.2
(22) Anmeldetag: 26.11.2020
(51) Int. Cl.: B29C 65/18, B29C 65/24, B29C 65/74, B65B 51/14, B65B 7/16, B29C 65/00

(54) **VERPACKUNGSMASCHINE UND VERFAHREN MIT EINEM PASSIVEN SIEGELELEMENT FÜR EMPFINDLICHE FOLIEN**

(30) Priorität: 06.12.2019 DE 102019219063
(71) Anmelder: MULTIVAC Sepp Haggenmüller SE & Co. KG, 87787 Wolfertschwenden (DE)
(72) Erfinder: ICKERT, Lars, 87437 Kempten (DE)
(74) Vertreter: Grünecker Patent- und Rechtsanwälte PartG mbB

(57) **Zusammenfassung**

Die Erfindung betrifft eine Verpackungsmaschine (1) mit einer Siegelstation (6), die ein Werkzeugunterteil (11) mit mindestens einer Schalenaufnahme (10) und ein Werkzeugoberteil (12) mit mindestens einer Siegeleinrichtung (18) umfasst, wobei die Siegeleinrichtung (18) ein Heizelement (19) und ein Siegelelement (20) aufweist, wobei das Heizelement (19) und/oder das Siegelelement (20) für einen Siegelvorgang (S) derart zueinander verstellbar sind, dass sie anhand einer dadurch hergestellten temporären mechanischen Kopplung (32) eine vorbestimmte Kontaktfläche (33) zur Herstellung einer gewünschten Wärmeleitung (34) zum Wärmetransport von Wärmeenergie (E) vom Heizelement (19) über das Siegelelement (20) an einen Rand (16) eines Produktträgers (5) ausbilden, um daran eine Siegelnaht (39) herzustellen. Ferner betrifft die Erfindung ein Verfahren zum Herstellen einer Siegelnaht (39).

## Beschreibung

Die Erfindung bezieht sich auf eine Verpackungsmaschine gemäß dem Anspruch 1 sowie auf ein Verfahren gemäß dem unabhängigen Verfahrensanspruch 14.

Üblicherweise wird die an einer Siegelstation eingesetzte Siegelplatte einer heiß siegelnden Verpackungsmaschine direkt beheizt und kann dabei die zu siegelnde Folie auch außerhalb eines Bereichs einer daran herzustellenden Siegelnaht erwärmen. Problematisch ist, dass das Vorheizen des Folienmaterials, d.h. das Erwärmen der Folienbahn zu einem Zeitpunkt bevor der Siegelvorgang daran ausgeführt wird, beispielsweise das Zuschneiden der Folie beeinflussen kann, weil sich dabei Eigenschaften des Folienmaterials unkontrolliert verändern, beispielsweise die Festigkeit des Folienmaterials abnimmt. Des Weiteren kann es sein, dass sich das Folienmaterial, insbesondere rückschrumpffähige Folien, aus einem vorgeheizten Zustand heraus beim Abkühlen ungleichmäßig sowie zeitlich unkontrollierbar verspannen, was sowohl den Siegelvorgang als auch den Schneidvorgang, unabhängig davon ob dieser vor oder nach dem Siegelvorgang stattfindet, erschwert.

Beim Versiegeln von Kartonschalen (im Folgenden auch Kartontrays bezeichnet) hat sich vorgeheiztes Deckelfolienmaterial insbesondere dann als problematisch erwiesen, wenn an einer Kartonschale unmittelbar vor dem Siegelvorgang der Schalenrand erst noch geformt werden soll. Hier kann es sein, dass vorgewärmtes Deckelfolienmaterial an einem Randbereich des Kartontrays, der zunächst noch umgebogen werden muss, zu früh anhaftet.

Bemühungen, die Siegelplatte nur kurzzeitig für den Siegelvorgang aufzuheizen, beispielsweise anhand eines pulsierenden Energieeintrags, mit der Absicht ein vorbestimmtes Siegeltemperaturniveau an der Siegelplatte lediglich intervallweise herzustellen, führten bislang nicht zu einem wirtschaftlich zufriedenstellenden sowie zu einem technisch realisierbaren Ergebnis, da hierfür zum Erzeugen des gewünschten Temperaturniveaus an der Siegelplatte ein sehr hoher getakteter Energieeintrag notwendig ist. Auch der Ansatz, eine beheizte Siegelplatte mittels spezifischer Werkstoffe für eine Bearbeitung empfindlicher Folien zu verbessern, war bisher nicht von Erfolg geprägt. Insbesondere bereiteten die elektrischen Eigenschaften von Werkstoffen als Kaltleiter Probleme, da diese sich im Wesentlichen umgekehrt zu dem gewünschten Effekt verhielten, wonach zur Bearbeitung empfindlicher Folien ein Wärmeeintrag gezielt und intermittierend im Bereich der Siegelnaht stattfinden soll.

WO 2016/055598 A1 offenbart eine Siegeleinrichtung mit einem Siegelwerkzeug, das ein Heizelement sowie ein daran befestigtes Siegelelement in Form einer Siegelschiene aufweist. Das Heizelement und das Siegelelement liegen hier als dauerhaft aneinandergekoppelte integrale Baugruppe vor.

Aufgabe der Erfindung ist es, eine Verpackungsmaschine sowie ein Verfahren insbesondere zum Versiegeln empfindlicher Folien bereitzustellen, wobei sich die für den Heißsiegelvorgang benötigte Wärmeenergie gezielt in einen Schalenrand im Bereich der herzustellenden Siegelnaht einführen lässt.

Diese Aufgabe wird gelöst durch eine Verpackungsmaschine mit den technischen Merkmalen gemäß Anspruch 1. Weiter wird diese Aufgabe gelöst anhand eines Verfahrens gemäß dem unabhängigen Anspruch 14.

Vorteilhafte Weiterbildungen der Erfindung sind durch die jeweiligen abhängigen Ansprüche angegeben.

Die erfindungsgemäße Verpackungsmaschine weist eine Siegelstation auf, die ein Werkzeugunterteil mit mindestens einer Schalenaufnahme und ein Werkzeugoberteil mit mindestens einer Siegeleinrichtung umfasst. Die Siegeleinrichtung verfügt über ein Heizelement und ein Siegelelement. Erfindungsgemäß sind das Heizelement und/oder das Siegelelement für einen Siegelvorgang derart zueinander verstellbar, dass sie anhand einer dadurch hergestellten temporären mechanischen Kopplung eine vorbestimmte Kontaktfläche zur Herstellung einer gewünschten Wärmeleitung zum Wärmetransport von Wärmeenergie vom Heizelement über das Siegelelement an einen Rand eines Produktträgers ausbilden, um daran eine Siegelnaht herzustellen. Damit lässt sich die Wärmeenergieübertragung vom Heizelement auf das zum Herstellen der Siegelnaht eingesetzte Siegelelement vorteilhaft steuern, da die vorbestimmte Kontaktfläche zwischen dem Heizelement und dem Siegelelement während des Herstellungsprozesses änderbar ist.

Dadurch, dass das Heizelement und das Siegelelement lediglich temporär für den Siegelvorgang mechanisch aneinandergekoppelt werden und beide insbesondere in separierter Bauweise vorliegen, wird das Siegelelement lediglich zeitweise über die vorbestimmte Kontaktfläche mittels des Heizelements beheizt. Das Siegelelement fungiert demnach als intermittierend schaltbare Wärmebrücke zwischen dem Heizelement und dem Schalenrand, indem es abwechselnd entweder mit reduzierter Kontaktfläche oder ganz kontaktlos zum Heizelement positioniert ist, um zumindest einen kontaktbedingten Wärmefluss zwischen diesen zu reduzieren oder zu vermeiden, oder alternativ für den Siegelvorgang auf Kontakt an dem Heizelement anliegt, um dann über die Wärmekopplung über die vorbestimmte Kontaktfläche Wärmeenergie vom Heizelement aufzunehmen und diese zumindest teilweise beim Siegelvorgang zur Herstellung der Siegelnaht an den Schalenrand weiterzuleiten.

In anderen Worten liegt bei der Erfindung das elektrisch, aktiv beheizte Heizelement als Wärmespeicher vor, während das Siegelelement wahlweise daran zur Herstellung der vorbestimmten Kontaktfläche andockt und als Passivsiegelwerkzeug, d.h. ohne selbst direkt aktiv elektrisch beheizt zu werden, als temporär geschalteter Koppler zum Übertragen der Wärmeenergie auf den Schalenrand eingesetzt wird. Die im aneinandergekoppelten Zustand vom Heizelement auf das Siegelelement übertragene Wärmeenergie kann über die vorbestimmte Kontaktfläche gezielt für den Siegelvorgang geregelt und eingesetzt werden. Demzufolge lässt sich insbesondere bei der Bearbeitung empfindlicher Folien das oben im Zusammenhang mit dem Stand der Technik beschriebene problematische Vorheizen besser vermeiden, wenigstens jedoch derart reduzieren, dass die Bearbeitung empfindlicher Folien hervorragend möglich ist.

Vorzugsweise sind zum Beendigen des Siegelvorgangs das Heizelement und/oder das Siegelelement derart zueinander verstellbar gelagert, dass die zwischen ihnen für den Siegelvorgang temporär ausgebildete Kontaktfläche zumindest teilweise reduzierbar, gegebenenfalls sogar ganz aufhebbar, ist. Dies hat zur Folge, dass das über die Wärmekopplung am Siegelelement erreichte Temperaturniveau abnimmt, weil die kontaktbedingte Wärmeleitung reduziert oder gar nicht mehr vorliegt.

Gemäß einer Variante sind zum Beendigen des Siegelvorgangs das Heizelement und/oder das Siegelelement derart zueinander verstellbar gelagert, dass sie zueinander beabstandet, d.h. kontaktlos, positioniert sind. Hiermit lässt sich die temporär für den Siegelvorgang eingesetzte mechanische Wärmekopplung komplett aufheben.

Eine Ausführungsform der Erfindung sieht vor, dass das Heizelement zwischen einer Ruheposition und einer Siegelposition bewegbar gelagert ist, wobei das Heizelement in der Siegelposition derart auf Kontakt an das Siegelelement heranbewegt verstellt ist, dass dazwischen die für den Siegelvorgang vorbestimmte Kontaktfläche hergestellt ist. In der Ruheposition kann das Heizelement vom Siegelelement derart beabstandet positioniert sein, dass beide voneinander getrennt, d.h. kontaktfrei zueinander, innerhalb des Werkzeugoberteils angeordnet sind, um den über die Kontaktfläche beim Siegelvorgang hergestellten Wärmetransport zu unterbinden. Dadurch ist es möglich, das Heizelement lediglich temporär als kontaktbedingte Wärmesenke zu betätigen, wodurch sich das Temperaturniveau des Siegelelements gezielt beeinflussen lässt.

Gemäß einer bevorzugten Variante ist vorgesehen, dass durch Verstellen des Heizelements aus der Siegelposition in die Ruheposition, insbesondere durch einen vertikalen Hub des Heizelements, die zwischen ihnen gebildete Kontaktfläche automatisch zumindest reduzierbar ist. Dabei kann vorgesehen sein, dass aus der Siegelposition heraus zunächst das Heizelement und das Siegelelement über eine vorbestimmte erste Strecke gemeinsam, aneinandergekoppelt höhenverstellbar sind und/oder dass das Heizelement dazu konfiguriert ist, entlang einer vorbestimmten zweiten Strecke des Hubwegs unabhängig, d.h. körperlich getrennt, vom Siegelelement in die Ruheposition verstellbar ist.

Vorzugsweise ist das Heizelement in Form einer Heizplatte ausgebildet, die höhenverstellbar innerhalb des Werkzeugoberteils gelagert ist. Zur Herstellung der für den Siegelvorgang temporär einrichtbaren Kontaktkopplung zwischen dem Heizelement und dem Siegelelement kann das insbesondere in Form einer Heizplatte ausgebildete Heizelement eine oder mehrere Thermorippen aufweisen, die am Siegelelement temporär andockbar sind und daran anliegend das Siegelelement an einem Bereich aufheizen, in dessen Angrenzung die Herstellung der Siegelnaht stattfindet.

Gemäß einer vorteilhaften Ausführungsform der Erfindung ist das Heizelement derart aktiv beheizbar, dass es während des Betriebs in einem Dauerzustand ein höheres Temperaturniveau als das Siegelelement aufweist. Dadurch kann das Aufheizen des Siegelelements auf eine vorbestimmte Zieltemperatur beschleunigt durchgeführt werden, wenn es mit dem Heizelement temporär in Kontakt gerät.

Eine Variante sieht vor, dass das Siegelelement in Form einer Platte ausgebildet ist. Das Siegelelement kann vor allem in Form einer Platte sowohl als Siegelwerkzeug als auch in Funktion einer Produktschutzplatte dienen, wobei es in der zuletzt genannten Funktion ein innerhalb des Produktträgers aufgenommenes Produkt, beispielsweise ein Lebensmittelprodukt, vom Heizelement abschirmt.

Das Siegelelement kann insbesondere eine Plattenform aufweisen, die in horizontaler Projektionsebene im Wesentlichen der Projektionsfläche des Produktträgers entspricht, d.h. sich auch oberhalb des Schalenrands erstreckt. Damit lässt sich die Siegelstation in ihrem Innenraum mittels des darin gelagerten Siegelelements im Wesentlichen in eine Wärmekammer, einschließlich des darin positionierten Heizelements, und in eine kühler gehaltene Produktbereichskammer, einschließlich der Schalenaufnahme und des darin aufgenommenen Produktträgers, samt einem darin platzierten Produkt, einteilen.

Von Vorteil ist es, wenn das Siegelelement als einteilig ausgebildete Siegelplatte vorliegt. Damit ist das Siegelelement kostengünstig herstellbar und lässt sich in kompakter Bauweise an der Siegelstation integrieren. Besonders wenig Bauraum beansprucht das Siegelelement, wenn es als Siegelplatte mit konstanter Dicke ausgebildet ist, beispielsweise als Siegelplatte, die eine konstante Dicke von maximal 1 mm aufweist.

Gemäß einer Variante umfasst die Siegeleinrichtung ein Schneidelement, das am Heizelement befestigt ist, sodass es anhand einer Hubbewegung des Heizelements verstellbar gelagert ist. Vorzugsweise ist das Siegelelement derart plattenförmig ausgebildet, dass zwischen dem Werkzeugoberteil und dem Werkzeugunterteil lediglich umfangsseitig ein schmaler Schlitz für das Schneidelement freigelassen wird, das zum Zuschneiden einer für den Siegelvorgang eingesetzten Stoffbahn dient.

Vorzugsweise ist das Schneidelement derart ausgebildet, dass es durch Absenken des Heizelements eine gespannte Stoffbahn durchtrennt, bevor das Heizelement am Siegelelement andockt, d.h. daran in Kontakt gerät.

Zweckmäßig ist es, wenn die als Siegelelement vorliegende Siegelplatte eine Dicke aufweist, die maximal 1 mm beträgt. Das Siegelelement liegt damit derart dünn vor, dass ein kontaktbedingtes Aufheizen des Siegelelements besonders zügig möglich ist. Hierzu kann das Siegelelement aus einem nichtrostenden Bandstahl heraus hergestellt sein.

Vorteilhaft ist es, wenn das Siegelelement eine Platte aufweist, die aus einem 0,2 mm starken, nichtrostenden Federbandstahl hergestellt ist. Die Siegelplatte kann damit in etwa die Stärke eines für den Siegelvorgang eingesetzten Stoffbahnmaterials, beispielsweise einer eingesetzten Deckelfolie, aufweisen, wobei die metallische Siegelplatte eine erheblich größere Wärmeleitfähigkeit als das Kunststoffmaterial der Stoffbahn aufweisen kann, sodass die Wärmeleitung zügig auf die Siegelplatte durchführbar ist, ohne nachteilig das Folienmaterial vorzuerwärmen.

Vorzugsweise ist das Siegelelement als Federblech ausgebildet, das beim Siegelvorgang in abgewandter Richtung zum Produktträger durchbiegbar ist, wenn das Heizelement und das Siegelelement aneinander gekoppelt an den Schalenrand des Produktträgers gedrückt sind. Dafür kann das Federblech im spannungsfreien Zustand eine schräg gestellte Umrandung aufweisen, die als Formwerkzeug zum Falten des Schalenrands des Produktträgers einsetzbar ist. Dies kann vor allen Dingen vorteilhaft bei der Bearbeitung von Kartontrays sein, die hinsichtlich ihres Schalenrands in einem halbfertig hergestellten Zustand der Siegelstation zugeführt werden. Insbesondere lässt sich an solchen halbfertig vorliegenden Kartontrays durch Absenken des Federblechs mittels der daran ausgebildeten schräg gestellten Umrandung der Schalenrand in eine vorbestimmte Ausrichtung für den Siegelvorgang umlegen. Zum halbfertigen Kartontray hingewandt kann die schräg gestellte Umrandung konisch ausgebildet sein, um besser in den Kartontray eintauchen zu können.

Vorzugsweise verfügt das Werkzeugoberteil über mindestens ein vom Heizelement gesondert gelagertes Kühlelement, woran das Siegelelement zwischen den jeweiligen Siegelvorgängen zur Abkühlung andockbar ist. Vor allen Dingen kann das Siegelelement am Kühlelement anliegend positioniert sein, wenn sich das Heizelement in der Ruheposition befindet. Es ist somit möglich, dass das Siegelelement während des Herstellungsprozesses gesondert mit dem Heizelement und dem Kühlelement in Kontakt gerät, sodass dem Siegelelement abwechselnd Wärme kontaktbedingt zugeführt sowie abgeführt wird.

Für einen kostenreduzierten Aufbau kann das Kühlelement als integraler Bestandteil eines Deckels des Werkzeugoberteils ausgebildet sein, wobei das Kühlelement vorzugsweise von einem oberen Teil des Deckels in den Innenraum des Werkzeugoberteils vorsteht. Vorzugsweise bildet das Kühlelement eine Anlagefläche für das Siegelelement aus, die um ein Vielfaches größer als die vorbestimmte Kontaktfläche zwischen dem Heizelement und dem Siegelelement für den Siegelvorgang ist.

Eine besonders effektive Kühlrate kann dadurch erreicht werden, dass das Kühlelement zumindest abschnittsweise in Form einer Platte ausgebildet ist, deren Anlagefläche für das Siegelelement größer als die für den Siegelvorgang temporär hergestellte Kontaktfläche ist. Zum Beeinflussen der Kühlrate kann das Kühlelement mit einer vorbestimmten Anzahl an Kühlrippen ausgestattet sein.

Technisch sinnvoll ist es, wenn das Siegelelement am Kühlelement vorgespannt, beispielsweise durch mindestens eine dazwischen angeordnete Zugfeder, gelagert ist. Das Siegelelement kann somit zwischen den Siegelvorgängen automatisch ans Kühlelement gedrückt gehalten werden, insbesondere dann, wenn das Heizelement vom Siegelelement entkoppelt in seiner Ruheposition gelagert ist.

Vorzugsweise fungiert das Heizelement bei dessen Bewegung aus der Siegelposition in die Ruheposition als Mitnehmer, um das daran insbesondere über Federkraft angedrückte Siegelelement an das Kühlelement langsam heranzuführen. Das Andocken des Siegelelements am Kühlelement kann somit anhand der Hubbewegung des Heizelements koordiniert werden, sodass zum Schaffen einer Kopplung zwischen dem Siegelelement und dem Kühlelement kein gesonderter Verstellantrieb für das Siegelelement notwendig ist.

Für die Verstellbewegung des Heizelements und/oder des daran andockbaren Siegelelements können an der Siegeleinrichtung gesonderte Führungen oder eine gemeinsame Führung vorgesehen sein, die einen im Wesentlichen vertikalen Hub ermöglichen.

Die erfindungsgemäße Verpackungsmaschine liegt insbesondere in Form eines Traysealers vor. Der Traysealer kann sowohl zur Bearbeitung vorgefertigter, kunststoffbasierter Schalen (sogenannten Trays) als auch zur Bearbeitung von papierfaserbasierten Schalen, beispielsweise Kartontrays, eingesetzt werden.

Die Erfindung bezieht sich auch auf ein Verfahren zur Herstellung mindestens einer Siegelnaht an einem Schalenrand mindestens eines innerhalb einer Siegelstation in einer Schalenaufnahme bereitgestellten Produktträgers, beispielsweise eines Kartontrays. Erfindungsgemäß werden ein Heizelement und/oder ein Siegelelement einer innerhalb der Siegelstation gelagerten Siegeleinrichtung für einen Siegelvorgang derart relativ zueinander verstellt, dass sie anhand einer dadurch hergestellten temporäreren mechanischen Kopplung eine vorbestimmte Kontaktfläche zur Herstellung einer gewünschten Wärmeleitung zum Wärmetransport von Wärmeenergie vom Heizelement über das Siegelelement auf den Schalenrand des Produktträgers ausbilden, um daran die Siegelnaht herzustellen.

Beim erfindungsgemäßen Verfahren werden vorzugsweise das Heizelement und das Siegelelement als separat ausgebildete Komponenten derart für den Siegelvorgang aufeinander zu bewegt, dass zwischen Ihnen ein kontaktbasierter Wärmetransport vom Heizelement auf das Siegelelement stattfinden kann, um über die gebildete Kontaktfläche das Siegelelement auf eine vorbestimmte Zieltemperatur für den Siegelvorgang aufzuheizen.

Zum Beendigen des Siegelvorgangs können das Heizelement und/oder das Siegelelement derart zueinander verstellt werden, dass die zwischen ihnen ausgebildete Kontaktfläche zumindest teilweise wieder reduziert wird, damit das Siegelelement in Folge der reduzierten, insbesondere unterbundenen Wärmeleitung abkühlen kann. Für einen erneuten Siegelvorgang können das Heizelement und das Siegelelement wieder zum Ausbilden der für den Siegelvorgang vorbestimmten Kontaktfläche zur Herstellung der Wärmeleitung aneinander docken.

Bei der Erfindung liegt das Heizelement als Wärmesenke vor, von welcher temporär durch Kontaktschluss für den Siegelvorgang darin erzeugte Wärme auf das Siegelelement übergeht. Zwischen den jeweiligen Siegeltakten wird das Siegelelement insbesondere nicht unmittelbar aktiv vom Heizelement aufgeheizt bzw. auf einem gleichbleibenden Temperaturniveau gehalten, sondern ist derart vom Heizelement entkoppelt positioniert, dass es zwischen den Heiztakten abkühlen kann.

Die gesonderte Ausbildung des Heizelements vom Siegelelement ermöglicht eine vorteilhafte Bearbeitung insbesondere empfindlicher Folien, da diese temporär präzise Wärme empfangen können, d.h. nicht unnötig und unkontrollierbar vorgewärmt werden.

Ausführungsbeispiele der Erfindung werden anhand der folgenden Figuren dargestellt. Es zeigen
- Fig. 1: eine Verpackungsmaschine, die in Form eines Traysealers vorliegt,
- Fig. 2: eine schematische Darstellung einer Siegeleinrichtung,
- Fig. 3A bis 3E: die Arbeitsweise der in Figur 2 dargestellten Siegeleinrichtung,
- Fig. 4A bis 4E: die Arbeitsweise einer Siegeleinrichtung gemäß einer anderen Ausführungs-form, und
- Fig. 5: eine Verpackungsmaschine in Form einer Tiefziehverpackungsmaschine.

Gleiche Komponenten sind in den Figuren durchgängig mit gleichen Bezugszeichen versehen.

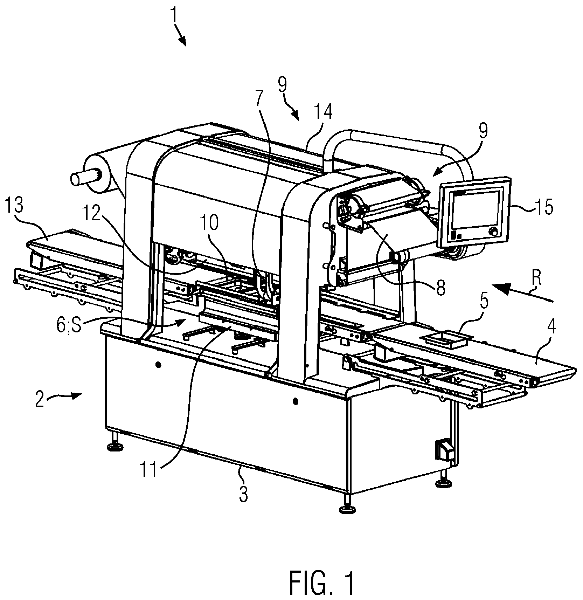

Figur 1 zeigt eine Verpackungsmaschine 1. Die Verpackungsmaschine 1 ist in Form eines Traysealers 2 ausgebildet. Der Traysealer 2 umfasst ein Maschinengestell 3 und ein Zuführband 4, das eingangsseitig am Maschinengestell 3 angeordnet und das dazu konfiguriert ist, Produktträger 5 für eine am Traysealer 2 vorgesehene Siegelstation 6 bereitzustellen. Der Siegelstation 6 ist in Figur 1 ein Greifer 7 zugeordnet, der dazu ausgebildet ist, Produktträger 5 vom Zuführband 4 aufzunehmen und in die Siegelstation 6 zu transportieren.

Durch einen in der Siegelstation 6 durchgeführten Siegelvorgang S kann eine Stoffbahn 8, beispielsweise eine Kunststofffolie, innerhalb der Siegelstation 6 mit darin aufgenommenen Produktträgern 5 zumindest teilweise versiegelt werden. Die Stoffbahn 8 wird mittels einer Abwickelvorrichtung 9 der Siegelstation 6 zugeführt.

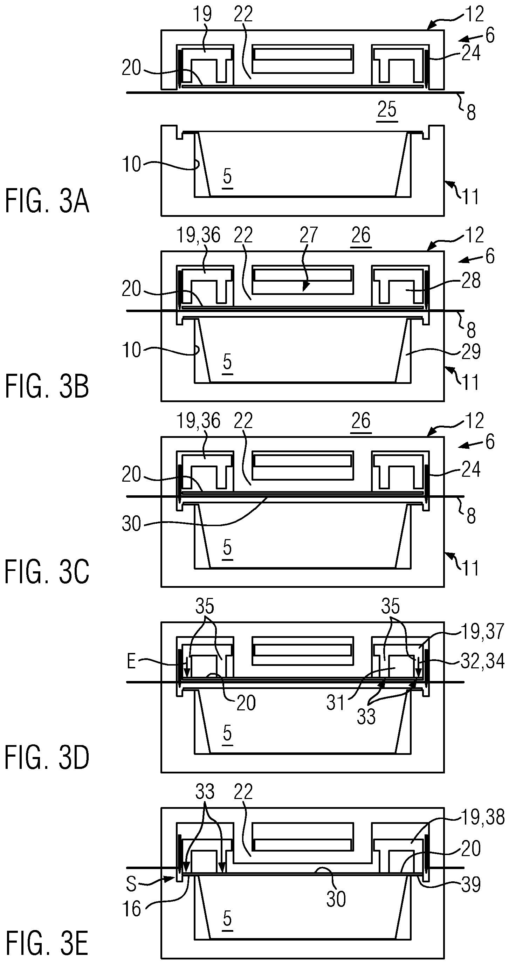

Zur Aufnahme der Produktträger 5 innerhalb der Siegelstation 6 ist eine Schalenaufnahme 10 vorgesehen. Die Schalenaufnahme 10 gehört zu einem Werkzeugunterteil 11 der Siegelstation 6. Ferner verfügt die Siegelstation 6 über ein Werkzeugoberteil 12, das zusammen mit dem Werkzeugunterteil 11 zusammenführbar gelagert ist, um dazwischen für den Siegelvorgang S eine vorzugsweise hermetisch abgedichtete Siegelkammer 27 (siehe Figur 3B) einzuschließen.

Im Anschluss an einen innerhalb der Siegelstation 6 durchgeführten Siegelvorgang S können die dann versiegelten Produktträger 5 mittels des Greifers 7 aus der Schalenaufnahme 5 heraus auf ein in Produktionsrichtung R nachgelagertes Abführband 13 transportiert werden. Zum Steuern des in Figur 1 gezeigten Traysealers 2 ist an einem Maschinenaufbau 14 ein Steuermodul 15 befestigt, womit ein Bediener den Herstellungsprozess am Traysealer 2 steuern kann.

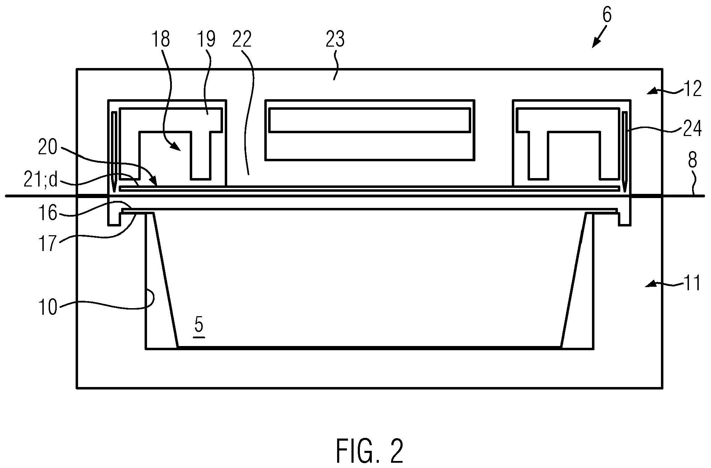

Figur 2 zeigt in schematischer Darstellung die Siegelstation 6 aus Figur 1. In der Schalenaufnahme 10 des Werkzeugunterteils 11 ist ein Produktträger 5 aufgenommen. Ein Schalenrand 16 des Produktträgers 5 liegt auf einer Auflage 17 der Schalenaufnahme 10 auf. Das oberhalb des Werkzeugunterteils 11 positionierte Werkzeugoberteil 12 umfasst eine Siegeleinrichtung 18. Die Siegeleinrichtung 18 weist ein Heizelement 19 und ein Siegelelement 20 auf. Das Siegelement 20 liegt in Figur 2 in Form einer Siegelplatte 21 mit konstanter Dicke d vor.

Die Siegelplatte 21 ist in Figur 2 an einem Kühlelement 22, daran auf Kontakt anliegend, gelagert. Das Kühlelement 22 ist in Figur 2 als integraler Bestandteil eines Deckels 23 des Werkzeugoberteils 12 ausgebildet. In Figur 2 ist das Siegelelement 20 vorgespannt mittels Federkraft am Kühlelement 22 gelagert.

Außerdem zeigt Figur 2, dass innerhalb des Werkzeugoberteils 12 ein Schneidelement 24 positioniert ist, das dazu ausgebildet ist, die oberhalb des Produktträgers 5 positionierte Stoffbahn 8 zuzuschneiden. Das Schneidelement 24 kann in Form eines endlosen Schneidmessers ausgebildet sein. Das Schneidelement 24 kann vorzugsweise derart betrieben werden, dass es vor dem innerhalb der Siegelstation 6 durchgeführten Siegelvorgang S die Stoffbahn 8 zuschneidet.

Figur 3A zeigt die Siegelstation 6 aus Figur 2 in einem offenen Zustand 25. Das Siegelelement 20 ist an das Kühlelement 22 herangerückt gelagert. Das Heizelement 19 ist vom Siegelelement 20 beabstandet, d.h. kontaktlos zu diesem, innerhalb des Werkzeugoberteils 12 positioniert.

In Figur 3B ist die Siegelstation 6 in einem geschlossenen Zustand 26. Im geschlossenen Zustand 26 ist die Stoffbahn 8 zwischen dem Werkzeugunterteil 11 und dem Werkzeugoberteil 12 eingeklemmt. Gegenüber Figur 3A ist das Werkzeugoberteil 12, einschließlich des darin positionierten Heizelements 19, des Siegelelements 20 sowie des darin ausgebildeten Kühlelements 22, näher an das Werkzeugunterteil 11 herangerückt positioniert.

Im geschlossenen Zustand 26 wird innerhalb der Siegelstation 6 eine Siegelkammer 27 ausgebildet, die im Wesentlichen durch das plattenförmige Siegelelement 20 in eine obere Kammer 28 und eine untere Kammer 29 aufgeteilt ist. In der oberen Kammer 28 sind die Siegeleinrichtung 18, einschließlich des Heizelements 19 sowie des Siegelelements 20, das Kühlelement 22 sowie das Schneidelement 24 aufgenommen. In der unteren Kammer 29 ist der Produktträger 5 innerhalb der Schalenaufnahme 10 positioniert.

Figur 3C zeigt die Siegelstation 6 weiterhin im geschlossenen Zustand 26, wobei das im Werkzeugoberteil 12 positionierte Schneidelement 24 in die darunter fixierte Stoffbahn 8 eintaucht, um aus der Stoffbahn 8 einen Verpackungsdeckel 30 auszuschneiden. Dafür kann das Schneidelement 24 mittels eines gesondert dafür vorgesehenen, nicht gezeigten Antriebs höhenverstellt gelagert sein. Alternativ wäre es vorstellbar, dass das Schneidelement 24 mittels eines ohnehin für das Heizelement 19 vorgesehenen Antriebs für den in Figur 3C gezeigten Schneidvorgang zu verstellen, insbesondere dann, wenn es am Heizelement 19 befestigt ist.

Figur 3D zeigt einen Aufheizvorgang 31, um das Siegelement 20 auf eine vorbestimmte Zieltemperatur für den Siegelvorgang S zu erwärmen. Dafür wird das Heizelement 19 aus der in den Figuren 3B und 3C gezeigten Lage, in welcher es vom Siegelelement 20 beabstandet ist, auf Kontakt an das Siegelelement 20 herangerückt, um dadurch zumindest temporär eine mechanische Kopplung 32 zur Herstellung einer vorbestimmten Kontaktfläche 33 herzustellen, sodass eine gewünschte Wärmeleitung 34 zum Wärmetransport von Wärmeenergie E vom Heizelement 19 auf das Siegelelement 20 eingerichtet ist. Zur Beschleunigung des Aufwärmens des Siegelelements 20 auf die vorbestimmte Zieltemperatur für den Siegelvorgang kann das Heizelement 19 mehrere Thermorippen 35 aufweisen, die beim Aufheizvorgang 31 auf Kontakt an das Siegelelement 20 herangerückt sind.

In den zuvor beschriebenen Figuren 3B und 3C ist das Heizelement 19 jeweils in einer Ruheposition 36 gelagert. In Figur 3D ist das Heizelement 19 in einer relativ zur Ruheposition 36 weiter abgesenkten Aufheizposition 37 gelagert, um die gewünschte Wärmeleitung 34 auf das Siegelelement 20 herzustellen.

Figur 3E zeigt die Siegelstation 6 weiterhin im geschlossenen Zustand 26, wobei das Heizelement 19 aus der in Figur 3D gezeigten Aufheizposition 37 weiter nach unten verlagert, in einer Siegelposition 38 positioniert ist. Dadurch drückt das Heizelement 19 das Siegelelement 20 auf den bereits zugeschnittenen Verpackungsdeckel 30, um diesen am Schalenrand 16 des Produktträgers 5 zu versiegeln. Damit lässt sich am Produktträger 5 eine Siegelnaht 39 herstellen.

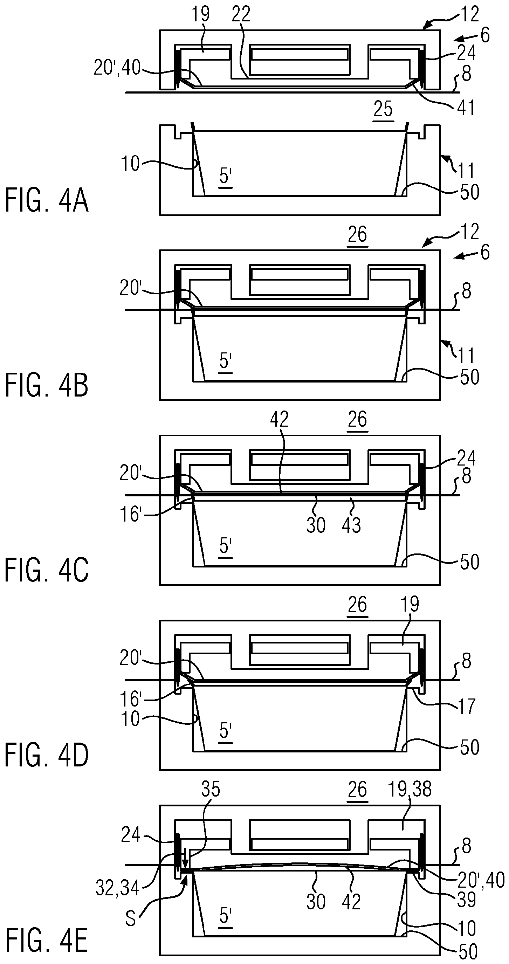

Die Figuren 4A bis 4E zeigen im Wesentlichen die Verfahrensschritte aus den Figuren 3A bis 3E, wobei in den Figuren 4A bis 4E ein Siegelelement 20' eingesetzt wird, das im Vergleich zum Siegelelement 20 aus den Figuren 3A bis 3E eine andere Form aufweist. Insbesondere kann das im Folgenden beschriebene Siegelelement 20' ebenfalls als Formwerkzeug eingesetzt werden.

In den Figuren 4A bis 4E ist das Siegelelement 20' als Federblech 40 ausgebildet. Das Federblech 40 verfügt über eine schräg gestellte Umrandung 41, die in einem spannungsfreien Zustand des Federblechs 40 auf einer zum darüber positionierten Heizelement 19 zugewandten Seite schräg nach oben steht.

In den Figuren 4A bis 4E weist die Schalenaufnahme 10 einen Boden 50 auf, wobei der Produktträger 5' mit einem daran ausgebildeten Verpackungsboden auf dem Boden 50 aufsitzt.

Das in Figur 4A gezeigte Siegelelement 20', welches als Federblech 40 vorliegt, wird im Zusammenhang mit den folgenden Figuren 4B bis 4E sowohl als Siegelwerkzeug als auch als Formwerkzeug eingesetzt, um am Produktträger 5', der als Kartontray vorliegt, gemäß Figur 4A einen daran ausgebildeten Schalenrand 16' umzulegen, woran sich der zugeschnittene Verpackungsdeckel 30 versiegeln lässt.

Der in Figur 4A innerhalb der Schalenaufnahme 10 positionierte Produktträger 5' weist einen hochgestellten Schalenrand 16' auf. Der Produktträger 5' kann beispielsweis als Kartonschale vorliegen.

In Figur 4A ist die Siegelstation 6 im geöffneten Zustand 25 dargestellt. Figur 4A zeigt, dass das Siegelelement 20' an äußeren Enden der schräg gestellten Umrandung 41 lediglich geringfügig auf Kontakt am Heizelement 19 anliegt. Alternativ dazu kann das in Figur 4A eingesetzte Siegelelement 20' auch vollständig kontaktlos relativ zum Heizelement 19 innerhalb des Werkzeugoberteils 12 positioniert sein.

Die Figuren 4B bis 4E zeigen die Siegelstation 6 im geschlossenen Zustand 26. In Figur 4B ist das Werkzeugoberteil 12 an das darunter positionierte Werkzeugunterteil 11 herangerückt gelagert, um dazwischen die Siegelkammer 27 einzuschließen. Die Stoffbahn 8 ist in Figur 4B unmittelbar oberhalb des Produktträgers 5' positioniert.

In Figur 4C taucht das Schneidelement 24 in die Stoffbahn 8, um den Verpackungsdeckel 30 zuzuschneiden. Das Siegelelement 20' ist unmittelbar oberhalb des Schalenrands 16' positioniert. Ein mittlerer Teil 42 des Siegelelements 20' ist einer Öffnungsweite 43 des Produktträgers 5' zugeordnet gelagert, wobei der mittlere Teil 42 geringfügig kleiner in horizontaler Projektionsebene ausgebildet ist als die Öffnungsweite 43 des Produktträgers 5', damit das Siegelelement 20' zum Umlegen des Schalenrands 16' in den Produktträger 5' eintauchen kann.

Das Umlegen des Schalenrands 16' wird nun anhand Figur 4D beschrieben. Aus der in den Figuren 4B und 4C gezeigten Ruheposition 36 wird nun in Figur 4D das Heizelement 19 weiter nach unten in eine Position 44 verlagert, in welcher das darunter positionierte Siegelelement 20' in den Produktträger 5' zum Umlegen des Schalenrands 16' hineingedrückt wird. Dabei lässt sich die bereits im Arbeitsschritt nach Figur 4C zugeschnittene Stoffbahn 8, d.h. der ausgeschnittene Verpackungsdeckel 30, mittels des Siegelelements 20' nach unten in Richtung des Schalenrands 16' mitnehmen.

Je weiter das Heizelement 19 nach unten in Richtung der Schalenaufnahme 10 verfährt, desto mehr wird mittels der schräg gestellten Umrandung 41 der Schalenrand 16' in Richtung der Auflage 17 niedergedrückt. Dabei, was insbesondere die folgende Figur 4E zeigt, verformt sich das Siegelelement 20', indem der mittlere Teil 42 nach oben in Richtung des darüber positionierten Heizelements 19 durchbiegt. Anhand der dadurch zum Heizelement 29 hin gerichteten Auswölbung wird das Siegelelement 20', insbesondere dessen mittlerer Teil 42, vom Verpackungsdeckel 30 sowie von einem innerhalb des Produktträgers 5' aufgenommenen Produkt weiter beabstandet.

In Figur 4E ist das Heizelement 19 nun aus der in Figur 4D gezeigten Position weiter nach unten in die Siegelposition 38 verstellt, worin die am Heizelement 19 ausgebildeten Thermorippen 35 die schräg gestellte Umrandung 41 in eine horizontale Ausrichtung umbiegen, sodass der Schalenrand 16' vollends auf die Auflage 17 niedergedrückt ist. In der Figur 4E kommt die temporär hergestellte mechanische Kopplung 32 zwischen dem Heizelement 19 und dem Siegelelement 20' zustande, um über die damit hergestellte Kontaktfläche 33 die Wärmeleitung 34 vom Heizelement 19 über das Siegelelement 20' an den Schalenrand 16' des Produktträgers 5' auszubilden, sodass in Folge die Siegelnaht 39 herstellbar ist.

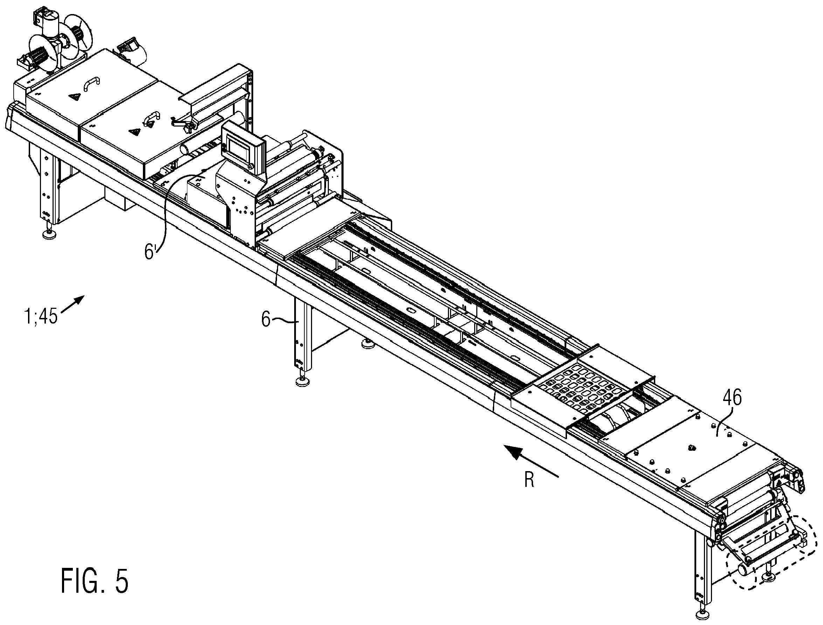

Figur 5 zeigt eine Verpackungsmaschine 1, die in Form einer Tiefziehverpackungsmaschine 45 vorliegt. An der Tiefziehverpackungsmaschine 45 ist eingangsseitig eine Formstation 46 vorgesehen, die zur Herstellung von Tiefziehmulden konfiguriert ist. Die Tiefziehmulden können weiter stromabwärts in Produktionsrichtung R mittels einer Siegelstation 6' versiegelt werden, wobei die in Figur 5 gezeigte Siegelstation 6' der Tiefziehverpackungsmaschine 45 eine Siegeleinrichtung aufweisen kann, die im Wesentlichen einen Aufbau sowie eine Funktionsweise der Siegeleinrichtung 18 aus den vorangehenden Figuren 2 bis 4 aufweisen kann.

Bei der Erfindung wird das an der Siegeleinrichtung 18 eingesetzte Siegelelement 20, 20' zwischen dem darüber angeordneten Heizelement 19 sowie der darunter angeordneten Schalenaufnahme 10 als Passivsiegelplatte bewegt, die lediglich temporär für den Siegelvorgang aktiv mittels des an sie herangerückten Heizelements 19 aufheizbar ist, um präzise die Herstellung der Siegelnaht 39 durchzuführen. Weil das Heizelement 19 außerhalb des Siegeltakts vom Siegelelement 20, 20' beabstandet oder zumindest derart positioniert ist, dass dazwischen lediglich eine reduzierte Kontaktfläche einhergeht, kann das Siegelelement 20, 20' in den jeweiligen Intervallen zwischen den Siegeltakten abkühlen, sodass die darunter positionierte Stoffbahn 8 nicht unnötig in Bereichen aufgeheizt wird, woran nicht die Siegelnaht 39 hergestellt wird. Die bei der Erfindung eingesetzte Siegeleinrichtung 18 eignet sich hervorragend zum Versiegeln empfindlicher Stoffbahnen, beispielsweise zum Versiegeln von Weichfolienmaterialien, die eine Foliendicke von wenigen Mikrometern aufweisen.

## Patentansprüche

1. Verpackungsmaschine (1) mit einer Siegelstation (6), die ein Werkzeugunterteil (11) mit mindestens einer Schalenaufnahme (10) und ein Werkzeugoberteil (12) mit mindestens einer Siegeleinrichtung (18) umfasst, wobei die Siegeleinrichtung (18) ein Heizelement (19) und ein Siegelelement (20) aufweist, **dadurch gekennzeichnet, dass** das Heizelement (19) und/oder das Siegelelement (20) für einen Siegelvorgang (S) derart zueinander verstellbar sind, dass sie anhand einer dadurch hergestellten temporären mechanischen Kopplung (32) eine vorbestimmte Kontaktfläche (33) zur Herstellung einer gewünschten Wärmeleitung (34) zum Wärmetransport von Wärmeenergie (E) vom Heizelement (19) über das Siegelelement (20) an einen Schalenrand (16) eines Produktträgers (5) ausbilden, um daran eine Siegelnaht (39) herzustellen.

2. Verpackungsmaschine nach Anspruch 1, **dadurch gekennzeichnet, dass** zum Beendigen des Siegelvorgangs (S) das Heizelement (19) und/oder das Siegelelement (20) derart zueinander verstellbar gelagert sind, dass die zwischen ihnen ausgebildete Kontaktfläche (33) zumindest teilweise reduzierbar ist.

3. Verpackungsmaschine nach Anspruch 1 oder 2, **dadurch gekennzeichnet, dass** das Heizelement (19) zwischen einer Ruheposition (36) und einer Siegelposition (38) bewegbar gelagert ist, wobei das Heizelement (19) in der Siegelposition (38) derart an das Siegelelement (20) heranbewegt verstellt ist, dass dazwischen die für den Siegelvorgang (S) vorbestimmte Kontaktfläche (33) hergestellt ist.

4. Verpackungsmaschine nach Anspruch 3, **dadurch gekennzeichnet, dass** durch Verstellen des Heizelements (19) aus der Siegelposition (38) in die Ruheposition (36) die Kontaktfläche (33) reduzierbar ist.

5. Verpackungsmaschine nach einem der vorangehenden Ansprüche, **dadurch gekennzeichnet, dass** das Siegelelement (20) in Form einer Platte (21) vorliegt.

6. Verpackungsmaschine nach Anspruch 5, **dadurch gekennzeichnet, dass** die Platte (21) einteilig ausgebildet ist.

7. Verpackungsmaschine nach Anspruch 5 oder 6, **dadurch gekennzeichnet, dass** die Platte (21) eine Dicke (d) aufweist, die maximal 1mm beträgt.

8. Verpackungsmaschine nach einem der vorangehenden Ansprüche, **dadurch gekennzeichnet, dass** das Siegelelement (20') als Federblech (40) ausgebildet ist, das beim Siegelvorgang (S) in abgewandter Richtung zum Produktträger (5) durchbiegbar ist, wenn das Heizelement (19) und das Siegelelement (20') aneinandergekoppelt an den Schalenrand (16') des Produktträgers (5) gedrückt sind.

9. Verpackungsmaschine nach Anspruch 8, **dadurch gekennzeichnet, dass** das Federblech (40) im spannungsfreien Zustand eine schräggestellte Umrandung (41) aufweist, die als Formwerkzeug zum Falten des Schalenrands (16') des Produktträgers (5) einsetzbar ist.

10. Verpackungsmaschine nach einem der vorangehenden Ansprüche, **dadurch gekennzeichnet, dass** das Werkzeugoberteil (12) mindestens ein vom Heizelement (19) gesondert gelagertes Kühlelement (22) aufweist, woran das Siegelelement (20, 20') zwischen den jeweiligen Siegelvorgängen (S) zur Abkühlung andockbar ist.

11. Verpackungsmaschine nach Anspruch 10, **dadurch gekennzeichnet, dass** das Kühlelement (22) als integraler Bestandteil eines Deckels (23) des Werkzeugoberteils (12) ausgebildet ist.

12. Verpackungsmaschine nach Anspruch 10 oder 11, **dadurch gekennzeichnet, dass** das Siegelelement (20, 20') am Kühlelement (22) vorgespannt gelagert ist.

13. Verpackungsmaschine nach einem der vorangehenden Ansprüche, **dadurch gekennzeichnet, dass** das Werkzeugoberteil (12) ein Schneidelement (24) aufweist, das dazu konfiguriert ist, vor dem Siegelvorgang (S) eine auf den Schalenrand (16, 16') des Produktträgers (5) zu versiegelnde obere Stoffbahn (8) zuzuschneiden.

14. Verfahren zur Herstellung mindestens einer Siegelnaht (39) an einem Schalenrand (16, 16') mindestens eines innerhalb einer Siegelstation (6, 6') in einer Schalenaufnahme (10) bereitgestellten Produktträgers (5), **dadurch gekennzeichnet, dass** ein Heizelement (19) und/oder ein Siegelelement (20, 20') einer innerhalb der Siegelstation (6) gelagerten Siegeleinrichtung (18) für einen Siegelvorgang (S) derart zueinander verstellt werden, dass sie anhand einer dadurch hergestellten temporären mechanischen Kopplung (32) eine vorbestimmte Kontaktfläche (33) zur Herstellung einer gewünschten Wärmeleitung (34) zum Wärmetransport von Wärmeenergie (E) vom Heizelement (19) über das Siegelelement (20, 20') an den Rand (16, 16') des Produktträgers (5) ausbilden, um die Siegelnaht (39) herzustellen.

15. Verfahren nach Anspruch 14, **dadurch gekennzeichnet, dass** zum Beendigung des Siegelvorgangs (S) das Heizelement (19) und/oder das Siegelelement (20, 20') derart zueinander verstellt werden, dass die zwischen ihnen ausgebildete Kontaktfläche (32) zumindest teilweise reduziert wird.
